(19) Europäisches Patentamt
European Patent Office
Office européen des brevets

(11) EP 2 877 505 B1

(12) **FASCICULE DE BREVET EUROPEEN**

(45) Date de publication et mention de la délivrance du brevet:
**23.11.2016 Bulletin 2016/47**

(21) Numéro de dépôt: **13745806.3**

(22) Date de dépôt: **26.07.2013**

(51) Int Cl.:
***C08F 22/38*** *(2006.01)* ***C08F 220/06*** *(2006.01)*
***C09K 8/52*** *(2006.01)* ***C08L 33/02*** *(2006.01)*

(86) Numéro de dépôt international:
**PCT/EP2013/065807**

(87) Numéro de publication internationale:
**WO 2014/016410 (30.01.2014 Gazette 2014/05)**

(54) **COMPOSITION DE POLYMÈRES POUR L'INHIBITION DE LA FORMATION DE DÉPÔTS INORGANIQUES ET/OU ORGANIQUES AU SEIN DE FORMATIONS SOUTERRAINES**

POLYMERZUSAMMENSETZUNG ZUR HEMMUNG DER BILDUNG VON ANORGANISCHEN UND/ODER ORGANISCHER ABLAGERUNGEN IN UNTERIRDISCHE FORMATIONEN

POLYMER COMPOSITION FOR INHIBITING THE FORMATION OF INORGANIC AND/OR ORGANIC DEPOSITS IN UNDERGROUND FORMATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2012 FR 1202134**

(43) Date de publication de la demande:
**03.06.2015 Bulletin 2015/23**

(73) Titulaire: **Rhodia Operations**
**75009 Paris (FR)**

(72) Inventeurs:
- **LABARRE, Dominique**
**F-92200 Neuilly Sur Seine (FR)**
- **WILSON, James**
**F-60580 Coye La Foret (FR)**

(74) Mandataire: **Cordier, Pascal Christian**
**Rhodia Operations**
**Direction de la Propriété Industrielle**
**40, rue de la Haie Coq**
**93306 Aubervilliers (FR)**

(56) Documents cités:
- **BLACKBURN, WILLIAM H. ET AL: "Size-controlled synthesis of monodisperse core/shell", COLLOID AND POLYMER SCIENCE , 286(5), 563-569 CODEN: CPMSB6; ISSN: 0303-402X, 2008, XP002690422,**
- **SINGH, NEETU ET AL: "Synthesis of multifunctional nanogels using a protected macromonomer approach", COLLOID AND POLYMER SCIENCE , 286(8-9), 1061-1069 CODEN: CPMSB6; ISSN: 0303-402X, 2008, XP002690423,**
- **LIAO, QIAN ET AL: "Hydroxypropylcellulose templated synthesis of surfactant-free poly(acrylic acid) nanogels in aqueous media", CARBOHYDRATE POLYMERS , 87(4), 2648-2654 CODEN: CAPOD8; ISSN: 0144-8617, 1 mars 2012 (2012-03-01), XP002690424,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 877 505 B1

## Description

La présente invention a trait à des compositions permettant d'assurer un relargage progressif d'agents de type inhibiteurs de formation de dépôts inorganiques ou organiques (notamment des inhibiteurs de tartre) au sein de formations souterraines telles des réservoirs hydrocarbonés.

Lors de l'extraction du pétrole hors d'un réservoir hydrocarboné (réservoir pétrolifère telle qu'une formation rocheuse, consolidée ou non, ou un sable, par exemple), différents facteurs peuvent induire la formation de dépôts, dont il est important d'inhiber la formation, pour éviter des phénomènes d'obstruction de la formation souterraine (roche et/ou puits), qui conduisent sinon à un ralentissement, voire à un arrêt de la production. Différents types de dépôts peuvent se former au sein d'un réservoir hydrocarboné, comme des tartres (dépôts essentiellement inorganiques à base de carbonate de calcium, sulfate de baryum, sulfate de strontium, sulfate de calcium et/ou fluorure de calcium, notamment) ou bien des dépôts d'asphaltènes ou de cires, ou bien encore d'hydrates de méthane.

Une méthode couramment employée pour essayer de limiter la formation de dépôts de ce type consiste à injecter sous pression dans la formation souterraine une composition aqueuse comprenant des inhibiteurs, typiquement selon une étape dite étape de « *squeeze* ». Une difficulté lors de la mise en oeuvre d'étapes de ce type est que, dans le cas général, seulement une faible quantité des inhibiteurs injectés est efficace pour assurer l'effet recherché d'inhibition, notamment du fait qu'une grande partie des agents injectés est éliminée immédiatement dans le flux des fluides de production lors du redémarrage du puits suite à l'étape dite de « *squeeze* ». Cette élimination d'une part importante des agents introduits a notamment un impact négatif en termes de coûts. En outre, plus fondamentalement, elle induit des teneurs limitées en inhibiteurs au sein de la formation souterraine, qui peuvent s'avérer trop faibles pour assurer l'effet d'inhibition recherché, qui nécessite souvent de maintenir une concentration minimale en inhibiteur au sein de la formation.

Pour tenter de pallier les difficultés précitées, il a été proposé différentes méthodes dans lesquelles on a cherché à faire précipiter l'inhibiteur au sein de la roche, par exemple en employant les méthodes décrites dans EP 599 832 ou US 5,399,270. Ce type de méthode limite certes dans une certaine mesure la perte d'agent inhibiteur, mais la précipitation se fait généralement de façon non contrôlée et peut induire dans certains cas une dégradation de la formation souterraine (bouchage des pores de la roche pétrolifère typiquement).

Une méthode plus spécifique qui a été proposée, et qui est décrite notamment dans WO 03/106810, consiste à employer des inhibiteurs sous la forme de microgels, obtenus en faisant réagir des inhibiteurs de type acides carboxyliques avec des polyols assurant une réticulation par formation de multiples liaisons esters. Là encore, la taille des microgels formés n'est pas contrôlée, et elle conduit à la formation d'objets de dimensions relativement importantes (de l'ordre de quelques microns), qui, là encore, sont propres à endommager la formation souterraine, parfois de façon irréversible.

Un but de la présente invention est de fournir une nouvelle méthode permettant d'accéder aux avantages des méthodes précitées, mais en évitant leurs inconvénients. En d'autres termes, un but de la présente invention est de fournir les moyens d'inhiber la perte rapide des inhibiteurs après leur injection au sein d'une formation souterraine, mais sans avoir pour ce faire à encourir le risque d'endommager la formation souterraine, et notamment celui d'obturer les pores de la roche.

A cet effet, la présente invention propose d'utiliser des inhibiteurs polymères sous la forme de chaînes polymères réticulés entre elles à l'aide d'agents de réticulation qui tendent à se dégrader progressivement dans les conditions de température et/ou de pH de la formation souterraine où ils sont introduits, ces chaînes réticulées ayant spécifiquement la forme d'objets de très faible dimension (nanogels), ce qui limite les phénomènes de bouchage rencontrés avec les méthodes précitées proposées dans l'état de la technique.

Plus précisément, selon un premier aspect, la présente invention a pour objet une composition comprenant, au sein d'un milieu solvant S (typiquement au sein d'un solvant aqueux, par exemple de l'eau ou un mélange eau/alcool, éventuellement additivé), des polymères P, réticulés chimiquement, et résultant de la copolymérisation radicalaire d'un mélange de monomères incluant :

- des monomères m1 éthyléniquement insaturés, également désignés ci-après par « monomères de structure », choisis parmi les monomères qui forment par polymérisation un polymère ayant un effet d'inhibition de la formation de dépôt organique et/ou inorganique ; et
- des monomères m2 polyéthyléniquement insaturés, également désignés ci-après par « monomères réticulants », et porteurs d'au moins un groupement clivable entre deux instaurations éthyléniques,

et où lesdits polymères P sont présents au sein du milieu solvant S sous la forme d'objets dispersés ayant des dimensions inférieures au micron, typiquement inférieures à 500nm, et plus préférentiellement inférieure à 100 nm (ces objets étant désignés dans la présent description par le terme générique de « nanogels »).

Par « groupement clivable », on entend, au sens de la présente description, un groupement au moins divalent,

présent au sein d'une chaîne, qui est stable au moins dans certaines conditions de pH et de température, mais qui est lysé, en induisant une coupure de chaîne, lorsqu'il est soumis à une température supérieure à une température limite (clivage thermique) et/ou lorsqu'il est placé dans des conditions spécifiques de pH (clivage induit par pH). La lyse du (ou des) groupe(s) clivable(s) présent(s) sur la chaîne s'effectue de préférence de façon irréversible et sans lyser le reste de la chaîne.

Les polymères P présents dans les compositions de l'invention comprennent de tels groupements clivables, qui sont introduits au sein des chaînes et assurent leur réticulation *via* l'emploi des monomères m2. Les groupes clivables présents sur les polymères P sont en général identiques à ceux présents sur les monomères m2 et il s'agit typiquement de groupes divalents -ester - ; - amide - ; - éther - ; - éther phosphate - ; ou bien encore - éther sulfate -. Selon un mode de réalisation intéressant, il s'agit de groupes ester ou amide, notamment d'une fonction ester. En général, les polymères P sont synthétisés dans des conditions de pH et de température où lesdits groupements clivables sont stables. Par ailleurs, on préfère que les monomères m1 ne soient pas porteurs de groupements clivables.

Dans les polymères P, les groupes clivables sont autant de « fragilités » qui induisent une perte progressive de la réticulation lorsque les polymères sont soumis à des conditions de température et/ou de pH induisant le clivage. Les conditions de température requises sont typiquement obtenues lorsqu'une composition de l'invention est injectée au sein d'une formation souterraine et les conditions de pH peuvent être obtenues à tout moment, au besoin par injection d'une base ou d'un acide pour obtenir le pH de clivage.

Les compositions selon l'invention comprennent ainsi des polymères sous une forme réticulée, ce qui leur assure une meilleure rétention au sein de la formation souterraine que des polymères sous forme non réticulés. Cette réticulation permet de ce fait de conserver une partie importante des polymères au sein de la formation en inhibant leur départ prématuré avant qu'ils ne puissent assurer l'effet recherché d'inhibition de la formation de dépôts inorganiques ou organiques.

Du fait de la présence du groupement clivable, cette réticulation des polymères P est cependant provisoire, et, par clivage progressif, les polymères P introduits au sein d'une formation souterraine sont ainsi susceptibles de relarguer de façon continue au cours du temps des chaînes polymères propres à assurer un effet d'inhibition de la formation de dépôts inorganiques ou organiques, au besoin en adaptant le pH au sein de la formation souterraine, par exemple par co-injection d'une base ou d'un acide. Schématiquement, dans les conditions de clivage, les chaînes à bases des monomères réticulant disparaissent progressivement, pour laisser la place à des polymères non réticulés ou très peu réticulés.

La méthode de l'invention permet, en fonction des conditions de température et de pH régnant au sein de la formation souterraine où l'utilisation de la composition est envisagée, d'adapter le polymère employé, de façon à obtenir le profil de relargage souhaité. La vitesse de libération peut être adaptée en jouant sur la nature du groupe clivable (plus le groupe sera fragile, plus rapide sera la libération) et sur le nombre de monomères réticulants dans le polymère (la vitesse de libération sera d'autant plus faible que ces monomères réticulants seront nombreux).

Par ailleurs, de façon spécifique, les polymères selon l'invention se présentent sous la forme d'objets de très faible taille, inférieure à 100 nm, qui seront désignés dans la présente description par le terme générique de « nanogels ».. Cette utilisation spécifique de nanogels, de taille beaucoup plus faible que celle des objets réticulés proposées dans les méthodes de l'état de la technique (bien inférieure à celles des microgels de WO 03/106810, en particulier) présente l'avantage d'induire beaucoup moins de phénomènes de dégradation de la formation souterraine (les risques de bouchage de la roche pétrolifère sont notamment largement diminués). La taille à laquelle il est fait référence ici est le diamètre hydrodynamique moyen des polymères dans la composition tel que mesuré par diffusion dynamique de la lumière ou bien le rayon de giration moyen des polymères dans la composition mesuré par diffusion statique de la lumière. Selon un mode de réalisation particulièrement intéressant, au sein d'une composition selon l'invention, les polymères P sont présents sous la forme d'objets ayant un rayon de giration inférieur à 100 nm, de préférence inférieur à 75 nm, par exemple entre 1 et 50 nm. Ces tailles très faibles sont aisément atteignables par polymérisation radicalaire des monomères m1 et m2. Cette taille peut être encore davantage maîtrisée en employant une polymérisation radicalaire contrôlée effectuée en présence d'un agent de contrôle.

De préférence, les polymères P sont obtenus *via* une polymérisation radicalaire des monomères m1 et m2 qui est spécifiquement réalisée en solution (les monomères sont mis en solution dans un solvant où les polymères formés solubles). Le cas échéant, la polymérisation radicalaire en solution est avantageusement conduite en employant le milieu solvant S de la composition de l'invention (typiquement de l'eau ou un mélange eau/alcool, éventuellement additivé) à titre de solvant de polymérisation, ce qui permet d'obtenir directement la composition à l'issue de la polymérisation. Plus généralement, on utilise de préférence des monomères m1 et m2 qui sont solubles dans le milieu solvant S et qui conduisent à la formation de polymères eux aussi solubles dans le milieu solvant S.

Typiquement, le milieu solvant S est aqueux et on emploie des monomères m1 et m2 qui conduisent à la formation de polymères hydrosolubles. Dans ce cas, il est préférable de ne pas employer des monomères tels que le NIPAM, qui sont hydrosolubles, mais qui forment des polymères qui précipitent dans l'eau lors de leur formation. Ainsi, selon un mode de réalisation intéressant, les monomères m1 et m2 sont distincts du NIPAM et plus généralement, les

monomères m1 et m2 sont de préférence des monomères qui ne sont pas susceptibles de former des polymères insolubles dans l'eau, au moins dans certaines conditions de température. En particulier, les monomères m1 et m2 ne sont de préférence pas des monomères capables de former des polymères présentant une LCST (température inférieure critique de solubilité, ou « *lower critical solution temperature* » en anglais).

Selon un mode de réalisation préférentiel, les polymères P sont issus d'une polymérisation radicalaire contrôlée des monomères m1 et m2, réalisée en présence d'un agent de contrôle. Selon ce mode de réalisation, particulièrement intéressant, les nanogels obtenus sont, schématiquement, à base de chaînes polymères de type poly(m1), à savoir des polymères (homo ou copolymères) à base des monomères structurants m1, réticulées entre elles comme dans le cas le plus général (compte tenu de la mise en oeuvre des monomères m2), mais qui présente en outre la spécificité, selon ce mode particulier de présenter toutes des longueurs sensiblement identiques (compte tenu de la présence de l'agent de contrôle). La mise en oeuvre d'une polymérisation radicalaire contrôlée autorise à réguler très finement le profil de délivrance et l'effet d'inhibition de type anti-tartre recherché selon l'invention.

Selon un mode de réalisation particulièrement intéressant, les polymères P sont issus d'une polymérisation radicalaire contrôlée des monomères m1 et m2, réalisée en présence d'un agent de contrôle et effectuée en outre en solution, de préférence dans les conditions précités.

Selon un autre aspect, la présente invention a pour objet un procédé de préparation particulièrement bien adapté pour synthétiser des compositions du type précité avec la faible taille recherchée pour les microgels. Ce procédé comporte une étape (E), de préférence conduite en solution, dans laquelle on met en présence :

- des monomères (m1) éthyléniquement insaturés du type précités ;
- des monomères (m2) polyéthyléniquement insaturés et porteurs d'une fonction clivable, du type précité,
- une source de radicaux libres ; et
- un agent de contrôle de la polymérisation,

avec un taux de réticulation, défini par le rapport molaire m2/(m1+m2), correspondant à a quantité de monomères m2 rapportée à la quantité totale de monomères, compris entre 0,05 et 25%, typiquement entre 0,1 et 15%, par exemple entre 0,5 et 10%

De préférence, dans l'étape (E), la quantité d'agent de contrôle rapportée à la quantité totale de monomères (agent de contrôle)/(m1+m2) est comprise entre 0.1% et 10%, de préférence entre 0,15 et 5% .

Lorsque l'étape (E) est conduite en solution, elle est réalisée dans un milieu solvant (avantageusement le milieu solvant S de la composition de l'invention) dans lequel à la fois les monomères m1 et m2, la source de radicaux libre et l'agent de contrôle sont solubles, typiquement à hauteur d'au moins 1 g/L dans le solvant dans les conditions de l'étape (E).

Selon encore un autre aspect, l'invention a pour objet l'utilisation de la composition précitée à titre d'inhibiteur de formation de dépôts inorganiques ou organiques, tels que des tartres, au sein d'un formation souterraine dans le cadre d'une extraction pétrolière. Pour ce faire, la composition selon l'invention est injectée au sein d'une formation souterraine, typiquement lors d'une étape de « *squeeze* » du type précité

Différents aspects et modes de réalisations préférentiels de l'invention vont maintenant être décrits plus en détails.

**Les monomères structurants (m1)**

On peut employer à titre de monomère structurant m1 selon l'invention tout monomère dont le polymère résultant est connu comme induisant un effet d'inhibition de la formation de dépôts inorganiques et/ou organiques tels que des tartres.

En particulier, selon un mode de réalisation intéressant, les monomères m1 peuvent typiquement être des monomères acide acrylique, qui conduisent à la formation de poly(acide acrylique), bien connu comme inhibiteur de la formation de tartre de sulfate de baryum.

Plus généralement, on peut utiliser à titre de monomères m1 selon l'invention des (notamment des anhydrides, esters et des dérivés chlorés comme les chlorures d'acides), ces acides et dérivés utiles à titre de monomères m1 selon l'invention étant typiquement choisis parmi :

- l'acide acrylique, l'acide méthacrylique et l'acide éthacrylique ;
- l'acide $\alpha$-chloroacrylique, l'acide crotonique, l'acide maléique, l'anhydride maléique, l'acide itaconique, l'acide citraconique, l'acide mésaconique, l'acide glutaconique, l'acide aconitique, l'acide fumarique ;

- l'acide bromoacrylique, l'acide bromométhylacrylique, l'acide a-cyano acrylique, l'acide β-méthyl acrylique, l'acide α-phénylacrylique, l'acide β-acryloxy propionique, l'acide β-carboxyethyl acrylique (acide acrylique oligomerisé tel que celui commercialisé sous le nom de Sipomer B-CEA), l'acide sorbique, l'acide α-chlorosorbique, l'acide angélique, l'acide cinnamique, l'acide p-chloro cinnamique, l'acide β-styrylacrylique, l'acide aitaconique, l'acide maléique, l'acide vinyl benzoique, l'acide propyl acrylique, l'acide acétamido acrylique, l'acide maléimido propyl carboxylique.

- les monoesters d'acide dicarboxylique monoéthyleniquement insaturé, où l'acide dicarboxylique monoéthyléniquement insaturé comprend de préférence de 4 à 10 atomes de carbone, par exemple de 4, 5 ou 6 ;

- l'acide maléique monométhylé ;

- l'acide vinylsulfonique, l'acide allylsulfonique, l'acrylate de sulfoéthyle, le méthacrylate de sulfoéthyle, l'acrylate de sulfopropyle, le méthacrylate de sulfopropyle, l'acide 2-hydroxy-3-acryloyloxypropylsulfonique, l'acide 2-hydroxy-3-methacryloyloxy propylsulfonique, les acides styrènesulfoniques, l'acide 2-acrylamido-2-méthyl propanesulfonique, l'acide vinylphosphonique, l'acide isopropénylphosphonique;

- les acides allylphosphosphoniques, l'acide diallylaminométhylenephosphonique ;

- les mélanges de deux ou plusieurs de ces acides ou dérivés d'acide.

Des composés intéressants à titre de monomères m1 sont l'acide acrylique, l'acide méthacrylique, l'acide éthacrylique, l'acide α-chloro-acrylique, l'acide bromo acrylique, l'acide bromomethyl acrylique, l'acide α- cyano acrylique, l'acide p- methylacrylique, l'acide α-phenyl acrylique, l'acide β-acryloxy propionique, l'acide β-carboxyethyl acrylique acid (acide acrylique oligomerisé, et notamment du type du Sipomer B-CEA précité), l'acide cinnamique, l'acide itaconique, l'acide maléique, l'acide glutaconique, l'acide aconitique, l'acide fumarique, l'acide vinylbenzoique, l'acide propyl acrylique, l'acide maleimido propyl carboxylique ; et les mélanges de ces composés.

Lorsque les monomères m1 contiennent des groupes acides, ils peuvent être mis en oeuvre lors de leur polymérisation sous la forme d'acide libre (-COOH par exemple) ou bien sous une forme neutralisée en tout ou partie (groupes carboxylates ou mélange cde carboxylates et de -COOH, par exemple).

A titre de monomères m1 on peut aussi employer (seuls ou éventuellement en mélange avec les composés précités) :

- des esters d'acide mono- ou di-carboxylique α,β-éthyléniquement insaturé et d'alcanediol, comme par exemple l'acrylate de 2-hydroxyéthyle, le méthacrylate de 2-hydroxyéthyle, l'ethacrylate de 2-hydroxyéthyle, 2-hydroxypropyl acrylate, le méthacrylate de 2-hydroxypropyle, l'acrylate de 3-hydroxypropyle, le méthacrylate de 3-hydroxypropyle, l'acrylate de 3-hydroxybutyle, le méthacrylate de 3-hydroxybutyle, et leurs mélanges.

- des N-vinyllactames ou des derivés de N-vinyllactames, typiquement choisis parmi la N-vinylpyrrolidone, la vinylpipéridone, la vinylcaprolactame, et leurs mélanges ;

- des composés vinylamide à ouverture de chaîne, comme par exemple le vinylformamide, le vinyl-N-méthylformamide, le N-vinylacétamide, le N-vinyl-N-méthylacétamide, le N-vinyl-N-ethylacetamide, le N-vinylpropionamide, le N-vinyl-N-méthylpropionamide, le vinylbutyramide, et leurs mélanges ;

- des esters de mono- ou di- acides carboxylique α,β ethyléniquement unsaturés, avec des amino alcools, choisis notamment parmi les acrylate et méthacrylates de N,N dimethylaminométhyle, de N,N-dimethylaminoéthyle, de N, N-diéthylaminoethyle, de N,N-dimethylaminopropyle, de N, N-diethylaminopropyle et de N, N dimethylaminocyclohexyl, et les mélanges de ces esters ;

- des amides d'acides mono- ou di- acides carboxylique α,β ethyléniquement unsaturés avec des diamines ayant au moins un groupe amine primaire ou secondaire, comme, par exemple, le N-[2-(diméthylamino)éthyl]acrylamide, le N[2-(dimethylamino)éthyl]méthacrylamide, le N-[3-(diméthylamino)propyl]acrylamide, le N-[3-(diméthylamino)propyl]méthacrylamide, le N-[4-(diméthylamino)butyl]acrylamide, le N-[4-(diméthylamino)butyl]méthacrylamide, ou bien encore le N-N-(diéthylamino)éthyl acrylamide, et leurs mélanges ;

- des amides ou leurs dérivés, incluant en particulier l'hydroxyl éthyl acrylamide, le diacétone acrylamide, le N-morpholine acrylamide, le chlorure d'acrylamido propyl trimethyl ammonium, le diethyl acrylamide, le N- isopropyl acryalmide, le propyl Acrylamide, et leurs mélanges ;

- des N,N-diallylamines et/ou des N,N-diallyl-alkylamines (où l'alkyle est de prérence un alkyle comprenant de 1 à 4 atomes de carbone) et/ou leurs sels d'addition acide et leurs produits quaternisés, par exemple la N, N-diallyl-N-methylamine et/ou and les composés (notamment chlorures et bromures) de N, N-diallyl-N, N-dimethylammonium ;
- des hétérocycles azotes vinyl- et/ou allyl- substitués, tels que les vinylimidazole et viny1-2-méthylimidazole,
- des composes hétéroaromatiques vinyl- et/ou allyl- substitués, comme par exemple les 2- et 4-vinylpyridine, les 2- et 4-allylpyridine, et leurs sels ;
- les amides d'esters de sulfobetaines tels que ceux décrits, par exemple dans la demande US 2010/0093874.

Des monomères m1 bien adaptés selon l'invention, utilisés dans les exemples données ci-après, sont l'acide acrylique, le vinyl sulfonate de sodium, acides styrènesulfoniques et/ou l'acide vinylphosphonique.

**Les monomères réticulants (m2)**

Ce sont typiquement des monomères porteurs de deux groupes éthyléniquement insaturés, séparés par un groupe espaceur incluant au moins un groupement clivable du type précité.

Il peut typiquement s'agir de monomères de formule H2C=C-A-C=CH2, où A désigne une chaîne hydrocarbonée divalente, saturée ou insaturée, linéaire ou ramifiée et éventuellement cyclisée en tout ou partie, par exemple une chaine alkylène ou alkénylène, ladite chaîne incluant un groupe clivable.

Des monomères réticulants adaptés incluent notamment les esters acryliques, les esters méthacryliques, les éthers de diallyl et les éther de divinyl d'alcools porteurs d'au moins deux groupes hydroxy (désignés ci-après par alcools « dihydrique », ce terme n'entendant pas désigner ici uniquement les alcools porteurs d'exactement deux groupes -OH, mais plus largement tout alcool porteur d'au minimum deux groupe OH, les groupes OH de ces alcools pouvant être en tout ou partie éthérifiés ou estérifiés).

Des monomères m2 adaptés incluent ainsi par exemple les esters acryliques, les esters méthacryliques, les éthers de diallyle et les éther de divinyle des alcools dihydriques suivant :

- le1,2-éthanediol ; le1,2-propanediol ; le 1,3-propanediol ; le 1,2-butanediol, ; le 1,3-butanediol ; le 2,3-butanediol ; le 1,4-butanediol ; le but-2-ène-1, 4-diol ; le1,2-pentanediol, le 1,5-pentanediol, le diethylène glycol, le triethylène glycol, le tetraéthylene glycol ; le dipropylène glycol ; le tripropylène glycol ; le tetrapropylène glycol, le 3-thiapentane-1, 5-diol ;
- les polyethylène glycols et/ou polypropylène glycols ; et les polytétrahydrofuranes, ces polyols ayant une masse moléculaire de préférence comprise entre 200 to 10 000 ;
- les mélange de deux ou plusieurs de ces alcools.

Par l'expression "polyéthylène glycols et/ou polypropylène glycols", on entend ici le groupe consistant en les homopolymères d'oxyde d'éthylène (polyethylene glycols), les homopolymères d'oxyde de propylène (polypropylene glycols), et les copolymers à base d'oxyde d'éthylène et d'oxyde de propylène, notamment les copolymères séqencés comprenant au moins un bloc de polyoxyde d'éthylene et au moins un bloc de poloxyde de propylène.

Des alcools dihydriques bien adaptés dans les esters et ethers précités le triméthylolpropane, le glycérol, le pentaéthrytol, le 1,2,5-pentane triol, le 1,2,6-hexane triol, le sorbitane , ou bien encore les sucres, tels que, entre autres, le sucrose, le glucose ou le mannose.

Ces alcools dihydriques peuvent avantageusement être employés sous forme d'éthoxylates ou propoxylates, à savoir respectivement après réaction avec de l'oxyde d'éthylène ou de l'oxyde de propylène.

Alternativement, on peut employer des ethers de glycydile, qu'on obtient par réaction des alcohols polyhydriques avec de l'épichlorohydrine.

A titre de monomères m2 adaptés, on peut également citer :

- les N-allylamines comprenant au moins deux fonctions amines. Des amines de ce type incluent notamment le 1,3-diaminopropane ou le 1,4-diaminobutane

- les amides formés à partir de ces allylamines comprenant au moins deux fonctions amines avec des acides carboxyliques insaturés, tels que l'acide acrylique, l'acide méthacrylique l'acide itaconique ou l'acide maléique.

Des monomères m2 bien adaptés selon l'invention, utilisés dans les exemples données ci-après, sont le diéthyleneglycol diAcrylate (dit « DiEGDA ») et le N,N'-méthylènebisacrylamide (dit « MBA »)

Plus généralement, on peut employer à titre de monomères m2 les composés acrylamido ou methacrylamido, notamment le N,N'-méthylènebisacrylamide, le N,N'-méthylènebismethacrylamide, le glyoxal bisacrylamide, ou le diacrylamido acide acétique.

**Polymérisation radicalaire contrôlée : l'agent de contrôle**

L'étape (E) du procédé de la présente invention, qui permet de synthétiser les polymères P par une polymérisation radicalaire contrôlée est spécifiquement mise en oeuvre en présence d'un agent de contrôle

Dans ce cadre, tout agent connu en soi comme adapté pour contrôler la polymérisation radicalaire des monomères (m1) et (m2) peut être employé dans l'étape (E).

Selon un mode de réalisation particulièrement intéressant, l'agent de contrôle mis en oeuvre dans l'étape (E) est un composé porteur d'un groupe thiocarbonylthio -S(C=S)-. Selon un mode de réalisation particulier, l'agent de contrôle peut être porteur de plusieurs groupes thiocarbonylthio. Il peut éventuellement s'agir d'une chaîne polymère porteuse d'un tel groupe.

Ainsi, cet agent de contrôle peut par exemple répondre à la formule (I) ci-dessous :

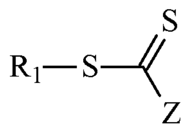

(I)

dans laquelle :

- Z représente :
  - un atome d'hydrogène,
  - un atome de chlore,
  - un radical alkyl éventuellement substitué, aryl éventuellement substitué,
  - un hétérocycle éventuellement substitué,
  - un radical alkylthio éventuellement substitué,
  - un radical arylthio éventuellement substitué,
  - un radical alkoxy éventuellement substitué,
  - un radical aryloxy éventuellement substitué,
  - un radical amino éventuellement substitué,
  - un radical hydrazine éventuellement substitué,
  - un radical alkoxycarbonyl éventuellement substitué,
  - un radical aryloxycarbonyl éventuellement substitué,
  - un radical carboxy, acyloxy éventuellement substitué,
  - un radical aroyloxy éventuellement substitué,
  - un radical carbamoyle éventuellement substitué,
  - un radical cyano,
  - un radical dialkyl- ou diaryl-phosphonato,
  - un radical dialkyl-phosphinato ou diaryl-phosphinato, ou
  - une chaîne polymère,

  et

  - $R_1$ représente :
    - un groupe alkyle, acyle, aryle, aralkyle, alcène ou alcyne éventuellement substitué,
    - un cycle carboné ou un hétérocycle, saturé ou non, aromatique éventuellement substitué, ou

- une chaîne polymère, de préférence hydrophile ou hydrodispersible lorsque l'agent est mis en oeuvre dans l'étape (E).

Les groupes $R_1$ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, perfluoroalkyle $C_nF_{2n+1}$, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque $R_1$ ou Z est une chaîne polymère, cette chaîne polymère peut être issue d'une polymérisation radicalaire ou ionique ou issue d'une polycondensation.

Avantageusement, on utilise comme agent de contrôle pour l'étape (E) des composés porteurs d'une fonction xanthate -S(C=S)O-, trithiocarbonate, des dithiocarbamate, ou dithiocarbazate, par exemple porteurs d'une fonction O-ethyl xanthate de formule $-S(C=S)OCH_2CH_3$.

Les xanthates se révèlent tout particulièrement intéressants, notamment ceux porteur d'une fonction O-ethyl xanthate $-S(C=S)OCH_2CH_3$, comme le O-ethyl-S-(1-methoxycarbonyl ethyl) xanthate $(CH_3CH(CO_2CH_3))S(C=S)OEt$ fabriqué par Rhodia sous le nom de Rhodixan® A1.

La mise en oeuvre d'un agent de contrôle dans la réaction de polymérisation permet de maîtriser finement la taille des chaînes polymères et de synthétiser des chaînes polymères qui sont toutes de taille et de morphologie sensiblement identique, ce qui permet de moduler de façon très fine et très précise les propriétés du nanogel.

**Polymérisation radicalaire contrôlée : la source de radicaux libre**

On peut utiliser, dans l'étape (E) du procédé de l'invention toute source de radicaux libres connue en soi comme adaptée aux procédés de polymérisation des monomères m1 et m2 choisis.

L'initiateur de polymérisation radicalaire peut par exemple être choisi parmi les initiateurs initiateurs suivants :

- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,

- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,

- les systèmes redox comportant des combinaisons telles que :

- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Selon un mode de réalisation intéressant, on peut employer un amorceur radicalaire de type redox, qui présente l'avantage de ne pas nécessiter un chauffage du milieu réactionnel (pas d'amorçage thermique).

Ainsi, la source de radicaux libres employée peut typiquement être choisie parmi les amorceurs redox classiquement utilisés en polymérisation radicalaire, typiquement ne nécessitant pas de chauffage pour leur amorçage thermique. Il s'agit typiquement d'un mélange d'au moins un agent oxydant hydrosoluble avec au moins un agent réducteur hydrosoluble.

L'agent oxydant présent dans le système redox peut par exemple être choisi parmi les peroxydes, tels que : le peroxyde d'hydrogène, l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle ; le persulfate de sodium, le persulfate de potassium, le persulfate d'ammonium, ou bien encore le bromate de potassium.

L'agent réducteur présent dans le système redox peut typiquement être choisi parmi le formaldéhyde sulfoxylate de sodium (notamment sous sa forme de dihydrate, connue sous le nom de Rongalit ou sous la forme d'un anhydride), l'acide ascorbique, l'acide érythorbique, les sulfites, bisulfites ou métasulfites (sulfites, bisulfites ou métasulfites de métaux alcalins en particulier), les nitrilotrispropionamides, et les amines et ethanolamines tertiaires (de préférence hydrosolubles).

Des systèmes redox possibles comportent des combinaisons telles que :

- les mélanges de persulfates hydrosolubles avec des amines tertiaires hydrosolubles,
- les mélanges de bromates hydrosolubles (bromate de métaux alcalins par exemple) avec des sulfites hydrosolubles (sulfites de métaux alcalins par exemple),
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Un système redox intéressant comprend (et de préférence consiste en) par exemple l'association de persulfate d'ammonium et de formaldéhyde sulfoxylate de sodium.

Les exemples ci-après illustrent la présente invention, dans lesquels les abréviations suivantes seront employées :

| | |
|---|---|
| **AA** | Acide Acrylique |
| **NaSS** | Styrènesulfonate de Sodium |
| **VPA** | Acide Vinyl Phosphonique |
| **DiEGDA** | DiEthyleneGlycol DiAcrylate |
| **MBA** | N,N'-Méthylènebisacrylamide |

**Partie 1 : *Synthèse de Polymères***

Les exemples 1 à 9 ci-dessous décrivent le protocole qui a été employé pour synthétiser différents polymères (des polymères témoins et des polymères se présentant sous la forme de « nanogels » selon l'invention). Après chaque polymérisation, la solution finale a été analysée par la méthode de « *Gel Permation Chromatography- Multi Angle Laser Light Scattering* » (GPC-MALLS) qui permet de mesurer la masse moléculaire moyenne en masse (Mw) des espèces en présence.

Les conditions utilisées pour la GPC-MALLS sont les suivantes :

- Un jeu de colonnes Aquagel-OH Mixed (3*(150 * 7,5 mm))
- phase stationnaire : styrène/divinylbenzène réticulé
- phase mobile spéciale PAA: solution tampon à pH=7 : 100 % eau, NaCl 100mM, $NaH_2PO_4$ 25mM, $Na_2HPO_4$ 25mM, $NaN_3$ 100 ppm
- un détecteur réfractométrique RI (Agilent 1100)
- un détecteur diffusion de lumière MALLS Mini Dawn

**Exemple 1 :**

**Synthèse d'un homopolymère à base d'AA (Comparatif)**

Dans un ballon tricol de 250 ml surmonté d'un réfrigérant et muni d'un agitateur magnétique sont introduits à température ambiante :

2,061g d'O-ethyl-S-(1-methoxycarbonyl ethyl) xanthate, $(CH_3CH(CO_2CH_3))S(C=S)OEt$, Rhodixan A1 fabriqué par Rhodia
9,28 g d'eau désionisée
9,28g d'éthanol.

Le milieu réactionnel est dégazé sous bullage d'azote pendant 30 minutes, puis le courant d'azote est maintenu au-dessus du milieu réactionnel pendant le déroulement de la polymérisation.

Le milieu réactionnel est porté à 70°C sous agitation.

On ajoute alors en une fois 4,37 g d'une solution à 10% massique d'initiateur V50. Immédiatement après, 87,71g d'une solution à 51% massique en acide acrylique sont ajoutés en continu pendant 3 heures. Simultanément, 50g d'une solution contenant 13,1g d'une solution à 10% massique d'initiateur V50 et 36,9g d'eau désionisée sont ajoutés en continu pendant 3h10. Une fois l'ajout des réactifs achevé le milieu réactionnel est maintenu à 70°C sous agitation pendant 1 heure. Puis, le chauffage est arrêté et on attend que le milieu réactionnel soit à température ambiante avant de le décharger.

La masse molaire mesurée par $^1H$ NMR est 8761 g/mol. L'extrait sec (115°C, 1 h) est de 34,6 w/w%. Le taux de conversion mesuré par HPLC est de 100%. La masse molaire moyenne mesurée par GPC MAALS est de 5 200 g/mol.

**Exemple 2 :**

**Synthèse d'un homopolymère à base d'AA (Comparatif)**

Dans un ballon tricol de 250 ml surmonté d'un réfrigérant et muni d'un agitateur magnétique sont introduits à température ambiante :

1,339 g d'O-ethyl-S-(1-methoxycarbonyl ethyl) xanthate, $(CH_3CH(CO_2CH_3))S(C=S)OEt$, Rhodixan A1 fabriqué par Rhodia
6,02 g d'eau désionisée
6,02 g d'éthanol.

Le milieu réactionnel est dégazé sous bullage d'azote pendant 30 minutes, puis le courant d'azote est maintenu au-dessus du milieu réactionnel pendant le déroulement de la polymérisation.

Le milieu réactionnel est porté à 70°C sous agitation.

On ajoute alors en une fois 2,84 g d'une solution à 10% massique d'initiateur V50. Immédiatement après, 92,02 g d'une solution à 49% massique en acide acrylique sont ajoutés en continu pendant 3 heures. Simultanément, 50g d'une solution contenant 8,51 g d'une solution à 10% massique d'initiateur V50 et 41,5 g d'eau désionisée sont ajoutés en continu pendant 3h10. Une fois l'ajout des réactifs achevé le milieu réactionnel est maintenu à 70°C sous agitation pendant 1 heure. Puis, le chauffage est arrêté et on attend que le milieu réactionnel soit à température ambiante avant de le décharger.

La masse molaire mesurée par $^1H$ NMR est 11691 g/mol. L'extrait sec (115°C, 1h) est de 35,1w/w%. Le taux de conversion mesuré par HPLC est de 100%. La masse molaire moyenne mesurée par GPC MAALS est de 9 100 g/mol.

**Exemple 3 :**

**Synthèse d'un nanogel à base d'AA**

Dans un ballon tricol de 250 ml surmonté d'un réfrigérant et muni d'un agitateur magnétique sont introduits à température ambiante :

2,061g d'O-ethyl-S-(1-methoxycarbonyl ethyl) xanthate, $(CH_3CH(CO_2CH_3))S(C{=}S)OEt$, Rhodixan A1 fabriqué par Rhodia
9,3 g d'eau desionisée
9,3 g d'ethanol.

Le milieu réactionnel est dégazé sous bullage d'azote pendant 30 minutes, puis le courant d'azote est maintenu au-dessus du milieu réactionnel pendant le déroulement de la polymérisation.
Le milieu réactionnel est porté à 70°C sous agitation.
On ajoute alors en une fois 4,4 g d'une solution à 10% massique d'initiateur V50. Immédiatement après, 107,1 g d'une solution aqueuse contenant 45 g d'acide acrylique, 10,7 g de DiEthyleneGlycol DiAcrylate et 51,4 d d'eau désionisée sont ajoutés en continu pendant 3 heures. Simultanément, 60g d'une solution contenant 13,1g d'une solution à 10% massique d'initiateur V50 et 46,9g d'eau désionisée sont ajoutés en continu pendant 3h00. Une fois l'ajout des réactifs achevé le milieu réactionnel est maintenu à 70°C sous agitation pendant 1 heure. Puis, le chauffage est arrêté et on attend que le milieu réactionnel soit à température ambiante avant de le décharger.
L'extrait sec (115°C, 1 h) est de 26,5 w/w%. Le taux de conversion de l'acide acrylique mesuré par HPLC est de 100%. La masse molaire moyenne mesurée par GPC MAALS est de 144 400 g/mol.

**Exemple 4**

**Synthèse d'un nanogel à base d'AA**

Dans un ballon tricol de 250 ml surmonté d'un réfrigérant et muni d'un agitateur magnétique sont introduits à température ambiante :

1,190 g d'O-ethyl-S-(1-methoxycarbonyl ethyl) xanthate, $(CH_3CH(CO_2CH_3))S(C{=}S)OEt$, Rhodixan A1 fabriqué par Rhodia
5,4 g d'eau désionisée
5,4 g d'ethanol.

Le milieu réactionnel est dégazé sous bullage d'azote pendant 30 minutes, puis le courant d'azote est maintenu au-dessus du milieu réactionnel pendant le déroulement de la polymérisation.
Le milieu réactionnel est porté à 70°C sous agitation.
On ajoute alors en une fois 2,52 g d'une solution à 10% massique d'initiateur V50. Immédiatement après, 83,7 g d'une solution aqueuse contenant 40 g d'acide acrylique, 6,3 g de DiEthyleneGlycol DiAcrylate et 37,3 g d'eau désionisée sont ajoutés en continu pendant 3 heures. Simultanément, 60g d'une solution contenant 7,6 g d'une solution à 10% massique d'initiateur V50 et 52,4 g d'eau désionisée sont ajoutés en continu pendant 3 heures. Une fois l'ajout des réactifs achevé le milieu réactionnel est maintenu à 70°C sous agitation pendant 1 heure. Puis, le chauffage est arrêté et on attend que le milieu réactionnel soit à température ambiante avant de le décharger.
L'extrait sec (115°C, 1 h) est de 29,3 w/w%. Le taux de conversion de l'acide acrylique mesuré par HPLC est de 100%. La masse molaire moyenne mesurée par GPC MAALS est de 65 220 g/mol.

**Exemple 5**

**Synthèse d'un nanogel à base d'AA**

Dans un ballon tricol de 250 ml surmonté d'un réfrigérant et muni d'un agitateur magnétique sont introduits à température ambiante :

2,061g d'O-ethyl-S-(1-methoxycarbonyl ethyl) xanthate, $(CH_3CH(CO_2CH_3))S(C{=}S)OEt$, Rhodixan A1 fabriqué par Rhodia
9,3 g d'eau desionisée

9,3 g d'ethanol.

Le milieu réactionnel est dégazé sous bullage d'azote pendant 30 minutes, puis le courant d'azote est maintenu au-dessus du milieu réactionnel pendant le déroulement de la polymérisation.

Le milieu réactionnel est porté à 70°C sous agitation.

On ajoute alors en une fois 4,4 g d'une solution à 10% massique d'initiateur V50. Immédiatement après, 107,1 g d'une solution aqueuse contenant 45 g d'acide acrylique, 2,2 g de Méthylene Bis Acrylamide et 37,3 g d'eau désionisée sont ajoutés en continu pendant 3 heures. Simultanément, 60g d'une solution contenant 13,1g d'une solution à 10% massique d'initiateur V50 et 46,9g d'eau désionisée sont ajoutés en continu pendant 3h00. Une fois l'ajout des réactifs achevé le milieu réactionnel est maintenu à 70°C sous agitation pendant 1 heure. Puis, le chauffage est arrêté et on attend que le milieu réactionnel soit à température ambiante avant de le décharger.

L'extrait sec (115°C, 1 h) est de 30,0 w/w%. Le taux de conversion de l'acide acrylique mesuré par HPLC est de 100%. La masse molaire moyenne mesurée par GPC MAALS est de 11 6700 g/mol.

## Exemple 6

### Synthèse d'un nanogel à base d'AA

Dans un ballon tricol de 250 ml surmonté d'un réfrigérant et muni d'un agitateur magnétique sont introduits à température ambiante :

2,061g d'O-ethyl-S-(1-methoxycarbonyl ethyl) xanthate, $(CH_3CH(CO_2CH_3))S(C=S)OEt$, Rhodixan A1 fabriqué par Rhodia
9,3 g d'eau désionisée
9,3 g d'éthanol.

Le milieu réactionnel est dégazé sous bullage d'azote pendant 30 minutes, puis le courant d'azote est maintenu au-dessus du milieu réactionnel pendant le déroulement de la polymérisation.

Le milieu réactionnel est porté à 70°C sous agitation.

On ajoute alors en une fois 4,4 g d'une solution à 10% massique d'initiateur V50. Immédiatement après, 84,3 g d'une solution aqueuse contenant 45 g d'acide acrylique, 2,0 g de Méthylène Bis Acrylamide et 37,3 d d'eau désionisée sont ajoutés en continu pendant 3 heures. Simultanément, 60g d'une solution contenant 13,1g d'une solution à 10% massique d'initiateur V50 et 46,9g d'eau désionisée sont ajoutés en continu pendant 3h00. Une fois l'ajout des réactifs achevé le milieu réactionnel est maintenu à 70°C sous agitation pendant 1 heure. Puis, le chauffage est arrêté et on attend que le milieu réactionnel soit à température ambiante avant de le décharger.

L'extrait sec (115°C, 1 h) est de 30,0 w/w%. Le taux de conversion de l'acide acrylique mesuré par HPLC est de 100%. La masse molaire moyenne mesurée par GPC MAALS est de 11 6700 g/mol.

## Exemple 7

### Synthèse d'un nanogel à base d'AA

Dans un ballon tricol de 250 ml surmonté d'un réfrigérant et muni d'un agitateur magnétique sont introduits à température ambiante :

2,061g d'O-ethyl-S-(1-methoxycarbonyl ethyl) xanthate, $(CH_3CH(CO_2CH_3))S(C=S)OEt$, Rhodixan A1 fabriqué par Rhodia
9,3 g d'eau desionisée
9,3 g d'ethanol.

Le milieu réactionnel est dégazé sous bullage d'azote pendant 30 minutes, puis le courant d'azote est maintenu au-dessus du milieu réactionnel pendant le déroulement de la polymérisation.

Le milieu réactionnel est porté à 70°C sous agitation.

On ajoute alors en une fois 4,4 g d'une solution à 10% massique d'initiateur V50. Immédiatement après, 84,3 g d'une solution aqueuse contenant 45 g d'acide acrylique, 5,5 g de DiEthyleneGlycol DiAcrylate, 0,5 g de Methylene Bis Acrylamide et 43,6 g d'eau désionisée sont ajoutés en continu pendant 3 heures. Simultanément, 60g d'une solution contenant 13,1g d'une solution à 10% massique d'initiateur V50 et 46,9g d'eau désionisée sont ajoutés en continu pendant 3h00. Une fois l'ajout des réactifs achevé le milieu réactionnel est maintenu à 70°C sous agitation pendant 1

heure. Puis, le chauffage est arrêté et on attend que le milieu réactionnel soit à température ambiante avant de le décharger.

L'extrait sec (115°C, 1 h) est de 29,0 w/w%. Le taux de conversion de l'acide acrylique mesuré par HPLC est de 100%. La masse molaire moyenne mesurée par GPC MAALS est de 31 280 g/mol.

## Exemple 8

### Synthèse d'un nanogel à base d'AA et de NaSS

Dans un ballon tricol de 250 ml surmonté d'un réfrigérant et muni d'un agitateur magnétique sont introduits à température ambiante :

2,061 g d'O-ethyl-S-(1-methoxycarbonyl ethyl) xanthate, $(CH_3CH(CO_2CH_3))S(C{=}S)OEt$, Rhodixan A1 fabriqué par Rhodia
9,3 g d'eau désionisée
9,3 g d'éthanol.

Le milieu réactionnel est dégazé sous bullage d'azote pendant 30 minutes, puis le courant d'azote est maintenu au-dessus du milieu réactionnel pendant le déroulement de la polymérisation.

Le milieu réactionnel est porté à 70°C sous agitation.

On ajoute alors en une fois 4,4 g d'une solution à 10% massique d'initiateur V50. Immédiatement après, 94,8 g d'une solution aqueuse contenant 45 g d'acide acrylique, 9,4 g de DiEthyleneGlycol DiAcrylate et 40,4 g d'eau désionisée sont ajoutés en continu pendant 3 heures. Simultanément, 50g d'une solution contenant 13,1g d'une solution à 10% massique d'initiateur V50 et 36,9g d'eau désionisée sont ajoutés en continu pendant 3h00. Une fois l'ajout des réactifs achevé le milieu réactionnel est maintenu à 70°C sous agitation pendant 1 heure. Puis, le chauffage est arrêté et on attend que le milieu réactionnel soit à température ambiante avant de le décharger, puis d'en ajuster le pH à 3,4 avec de la soude à 50% wt. Ce milieu est alors concentré sous pression réduite à l'aide d'un rotavapor, jusqu'à obtenir une concentration en solide de 49,8 %wt (115°C, 60minutes). Cette solution est réintroduite dans le réacteur tricol, on y ajoute 9,9 g de NaSS. Le milieu réactionnel est dégazé sous bullage d'azote pendant 30 minutes, puis le courant d'azote est maintenu au-dessus du milieu réactionnel pendant le déroulement de la polymérisation.

Le milieu réactionnel est porté à 70°C sous agitation.

On ajoute alors en une fois 8,7 g d'une solution à 10% massique d'initiateur V50. La solution est maintenue pendant 6 heures à 70°C sous agitation puis on ajoute de nouveau en une fois 8,7 g d'une solution à 10% massique d'initiateur V50. Une fois l'ajout des réactifs achevé le milieu réactionnel est maintenu à 70°C sous agitation pendant 12 heures. Puis, le chauffage est arrêté et on attend que le milieu réactionnel soit à température ambiante avant de le décharger.

L'extrait sec (115°C, 1 h) est de 25,9 w/w%. Le taux de conversion de l'acide acrylique mesuré par HPLC est de 100%. La masse molaire moyenne mesurée par GPC MAALS est de 105000 g/mol.

## Exemple 9

### Synthèse d'un nanogel à base d'AA et de VPA - ref 332

Dans un ballon tricol de 250 ml surmonté d'un réfrigérant et muni d'un agitateur magnétique sont introduits à température ambiante :

- 2,061 g d'O-ethyl-S-(1-methoxycarbonyl ethyl) xanthate, $(CH_3CH(CO_2CH_3))S(C{=}S)OEt$, Rhodixan A1 fabriqué par Rhodia
- 9,3 g d'eau desionisée
- 9,3 g d'ethanol.

Le milieu réactionnel est dégazé sous bullage d'azote pendant 30 minutes, puis le courant d'azote est maintenu au-dessus du milieu réactionnel pendant le déroulement de la polymérisation.

Le milieu réactionnel est porté à 70°C sous agitation.

On ajoute alors en une fois 4,4 g d'une solution à 10% massique d'initiateur V50. Immédiatement après, 84,8 g d'une solution aqueuse contenant 45 g d'acide acrylique, 9,4 g de DiEthyleneGlycol DiAcrylate et 30,4 g d'eau désionisée sont ajoutés en continu pendant 3 heures. Simultanément, 60g d'une solution contenant 13,1g d'une solution à 10% massique d'initiateur V50 et 46,9g d'eau désionisée sont ajoutés en continu pendant 3h00. Une fois l'ajout des

réactifs achevé le milieu réactionnel est maintenu à 70°C sous agitation pendant 1 heure. Puis, le chauffage est arrêté et on attend que le milieu réactionnel soit à température ambiante avant de le décharger, puis d'en ajuster le pH à 2,6 avec de la soude à 50% wt. Ce milieu est alors concentré sous pression réduite à l'aide d'un rotavapor, jusqu'à obtenir une concentration en solide de 44,7 %wt (115°C, 60minutes). Cette solution est réintroduite dans le réacteur tricol, on y ajoute 4,9 g de VPA. Le milieu réactionnel est dégazé sous bullage d'azote pendant 30 minutes, puis le courant d'azote est maintenu au-dessus du milieu réactionnel pendant le déroulement de la polymérisation.

Le milieu réactionnel est porté à 70°C sous agitation.

On ajoute alors en une fois 8,7 g d'une solution à 10% massique d'initiateur V50. La solution est maintenue pendant 6 heures à 70°C sous agitation puis on ajoute de nouveau en une fois 8,7 g d'une solution à 10% massique d'initiateur V50. Une fois l'ajout des réactifs achevé le milieu réactionnel est maintenu à 70°C sous agitation pendant 12 heures. Puis, le chauffage est arrêté et on attend que le milieu réactionnel soit à température ambiante avant de le décharger.

L'extrait sec (115°C, 1h) est de 20,0 w/w%. Le taux de conversion de l'acide acrylique mesuré par HPLC est de 100%. La masse molaire moyenne mesurée par GPC MAALS est de 72270 g/mol.

**Partie 2 : Propriété des polymères préparés**

Les propriétés des polymères synthétisés dans les exemples précédents ont été testées comme suit :

**Exemple 10 :**

**évaluation en condition statique des performances d'inhibition de la formation de tartre (BaSO4)**

Les polymères préparés on été évalués en condition statique, selon la méthodologie appelée « Jar test » ou « Bottle Test », qui consiste à mesurer le taux de cation précipitant (calcium ou baryum) soluble après mélange dans un flacon de deux eaux incompatibles, puis évolution du mélange sans agitation pendant un temps donné, et mesure par une méthode spectroscopique (ICP-AES) des cations solubles. Les expérimentations comprennent un essai témoin sans inhibiteur et des tests en présence d'inhibiteurs.

Cette évaluation est effectuée à 95°C et pH 5,5 après mélange de deux saumures dont l'une a la composition de l'eau de formation du champ FORTIES en Mer du Nord (contient du baryum) et l'autre a la composition de l'eau de Mer (contient du sulfate). L'inhibiteur est placé dans l'eau de mer. La concentration en inhibiteur est de 15 ppm (en matière active) par rapport au mélange final.

Le pH de la solution d'eau de mer contenant de l'inhibiteur est amené vers 5,5 avec une solution tampon acétate de sodium/acide acétique.

Les compositions des saumures (eau de FORTIES et eau de Mer) sont les suivantes :

Eau de FORTIES

| Ion | mg/L |
|---|---|
| $Na^+$ | 31275 |
| $Ca^{2+}$ | 2000 |
| $Mg^{2+}$ | 739 |
| $K^+$ | 654 |
| $Ba^{2+}$ | 269 |
| $Sr^{2+}$ | 771 |
| sel | Sel (g/L) |
| NaCl | 79,50 |
| $CaCl_2,2H_2O$ | 7,34 |
| $MgCl_2,6H_2O$ | 6,18 |
| KCl | 1,25 |
| $BaCl_2,2H_2O$ | 0,48 |
| $SrCl_2,6H_2O$ | 2,35 |

Eau de Mer

| Ion | mg/L |
|---|---|
| $Na^+$ | 10890 |
| $Ca^{2+}$ | 428 |
| $Mg^{2+}$ | 1368 |
| $K^+$ | 460 |
| $SO_4^{2-}$ | 2690 |
| sel | Sel (g/L) |
| NaCl | 24,40 |
| $CaCl_2,2H_2O$ | 1,57 |
| $MgCl_2,6H_2O$ | 11,44 |
| KCl | 0,88 |
| $Na_2SO4$ | 3,97 |

100 ml de chacune de ces eaux sont conditionnés dans des flacons de polyéthylène. Après avoir équilibré la température des saumures à 95°C dans une étuve, on verse le contenu du flacon « eau des FORTIES » dans le flacon contenant le baryum. On agite manuellement puis le mélange est remis à l'étuve à 95°C pendant 2h.

Pour chaque série d'essai, deux essais de contrôle sont réalisés :

blanc min : il s'agit d'un essai sans inhibiteur, la teneur en ion Baryum sera minimum (précipitation maximum du BaSO4).

blanc Max : il s'agit d'un essai sans sulfate et sans inhibiteur, l'eau de mer est remplacée par de l'eau épurée, la teneur en ion Baryum sera maximum, car il n'y a pas de précipitation.

Après les 2 heures de test, les flacons sont sortis de l'étuve et un prélèvement de 5 ml est effectué, puis dilué dans 5 ml d'une solution de « trempe » dont la composition est : 5000 ppm de KCL / 1000 ppm de PVS (Poly Vinyl Sulfonate de sodium) ajusté à pH 8 - 8.5 (avec NaOH 0.01 N). On effectue un dosage du Baryum (ICP-AES) sur ces prélèvements et on en déduit l'efficacité d'inhibition exprimée selon la formule ci-dessous.

$$\%\ \text{efficacité} = \frac{[Ba^{2+}] - [Ba^{2+}]_{min}}{[Ba^{2+}]_{max} - [Ba^{2+}]_{min}} * 100$$

avec $[Ba^{2+}]_{max}$ = concentration en $Ba^{2+}$ dans le blanc Max
$[Ba^{2+}]_{min}$ = concentration en $Ba^{2+}$ dans le blanc Min

Le tableau ci-dessous regroupe les performances obtenues

| inhibiteur | % efficacité d'inhibition BaSO4 (15 ppm) | % efficacité d'inhibition BaSO4 (30 ppm) |
|---|---|---|
| exemple 1 p-AA | 77 | 94 |
| exemple 2 p-AA | 84 | 93 |
| exemple 3 nanogel AA-DiEGDA | 43 | 56 |
| exemple 4 nanogel AA-DiEGDA | 55 | 71 |
| Exemple 5 nanogel AA-MBA | 61 | 75 |
| Exemple 6 nanogel AA-MBA | 45 | - |

(suite)

| inhibiteur | % efficacité d'inhibition BaSO4 (15 ppm) | % efficacité d'inhibition BaSO4 (30 ppm) |
|---|---|---|
| Exemple 7 nanogel AA-MBA-DiEGDA | 73 | 72 |
| Exemple 8 nanogel AA/NaSS DiEGDA | 67 | 64 |
| Exemple 9 nanogel AA/VPA DiEGDA | 54 | 67 |

**Exemple 11 :**

**capacité de relargage des nanogels soumis à une augmentation de la température**

Cet exemple illustre la capacité des nanogels selon l'invention à relarguer des unités polymériques lorsqu'ils sont soumis à une augmentation de température. En fonction de la sensibilité thermique des agents de réticulation présents dans la nanogel, le relargage sera, pour une température donnée, plus ou moins rapide.

Les solutions aqueuses de nanogels issues des exemples précédents ont été testées dans le conditions suivantes.

Les solutions aqueuses sont introduites dans des flacons en verre, à leur pH de fin de synthèse, puis degazées sous un bullage d'azote pendant 20 minutes. Après fermeture des flacons, ceux-ci sont placés dans une étuve pendant une semaine à température constante (75°C, 85°C et 95°C).

Des prélèvements sont opérés à intervalle de temps régulier et une analyse par la méthode de « Gel Permation Chromatography - Multi Angle Laser Light Scattering » (GPC-MALLS) permet de mesurer sur les prélèvements la masse moléculaire moyenne en masse (Mw) des espèces en présence.

Les conditions utilisées pour la GPC-MAALS sont les suivantes :

- Un jeu de colonnes Aquagel-OH Mixed (3*(150 * 7,5 mm))
- phase stationnaire : styrène/divinylbenzène réticulé
- phase mobile: solution tampon à pH=7 : 100 % eau, NaCl 100mM, $NaH_2PO_4$ 25mM, $Na_2HPO_4$ 25mM, $NaN_3$ 100 ppm
- un détecteur réfractométrique RI (Agilent 1100)
- un détecteur diffusion de lumière MALLS Mini Dawn

Le pH ayant également un effet une influence sur la vitesse d'hydrolyse des points de réticulation et donc sur la vitesse de relargage des espèces polymériques, le tableau ci-dessous précise le pH de chaque solution de nanogel traitée thermiquement et rappelle la masse molaire moyenne en « en masse » mesurée par GPC-MALLS.

| **Produit** | Mw (kg/mol) | pH |
|---|---|---|
| Exemple 3 AA/DiEGDA | 144 | 2,1 |
| Exemple 7 AA/DiEGDA/MBA | 31 | 2,0 |
| Exemple 5 AA/MBA | 117 | 2,0 |
| Exemple 4: AA/DiEGDA | 65 | 2,0 |
| Exemple 8 AA/NASS DiEGDA | 105 | 4,9 |
| Exemple 9 : AA/VPA DiEGDA | 72 | 3,2 |

Les tableaux ci-dessous regroupent, pour chaque nanogel de départ et chaque prélèvement, les valeurs de masse molaires moyenne « en masse » exprimées en kg/mol. Il est également indiqué en dernière colonne la masse molaire moyenne « en masse « correspondant à l'unité polymérique non réticulée (exemple 1 à 4)

| Exemple 3 | t=0 | 6h | 1jour | 2jours | 3jours | 7jours | 10jours | Polymère linéaire Exemple 1 |
|---|---|---|---|---|---|---|---|---|
| 95°C | 144 | 85 | 32 | 21 | 18 | 11 | 12 | 5,2 |

(suite)

| Exemple 3 | t=0 | 6h | 1jour | 2jours | 3jours | 7jours | 10jours | Polymère linéaire Exemple 1 |
|---|---|---|---|---|---|---|---|---|
| 85°C | 144 | 79 | 85 | 35 | 27 | 19 | 17 | 5,2 |
| 75°C | 144 | 69 | 55 | 43 | / | 35 | / | 5,2 |

| Exemple 4 | t=0 | 6h | 1jour | 2jours | 3jours | 4jours | 6jours | Polymère linéaire |
|---|---|---|---|---|---|---|---|---|
| 95°C | 65 | 42 | 22 | 15 | 14 | / | / | 9,1 |
| 85°C | 65 | 46 | 31 | 24 | 21 | 19 | | 9,1 |
| 75°C | 65 | 52 | 36 | 32 | / | / | 30 | 9,1 |

| Exemple 5 | t=0 | 6h | 1jour | 2jours | 3jours | 4jours | 7jours | Polymère linéaire |
|---|---|---|---|---|---|---|---|---|
| 95°C | 117 | 44 | 16 | 14 | / | / | / | 7,6 |
| 85°C | 117 | 77 | 37 | 22 | 19 | 15 | 9 | 7,6 |
| 75°C | 117 | 90 | 61 | 45 | / | 28 | 22 | 7,6 |

| Exemple 7 | t=0 | 6h | 1jour | 2jours | 3jours | 4jours | 7jours | Polymère linéaire |
|---|---|---|---|---|---|---|---|---|
| 95°C | 31 | 24 | 14 | 12 | / | 10 | / | 7,5 |
| 85°C | 31 | 29 | 22 | 16 | 14 | 11 | 9 | 7,5 |
| 75°C | 31 | / | 28 | 24 | 21 | / | / | 7,5 |

| Exemple 8 | t=0 | 6h | 1jour | 2jours | 3jours | 4jours | 7jours | Polymère linéaire |
|---|---|---|---|---|---|---|---|---|
| 95°C | 105 | 44 | 23 | 16 | 13 | 12 | 9 | 6,7 |
| 85°C | 105 | 72 | 39 | 26 | 21 | 18 | / | 6,7 |
| 75°C | 105 | 89 | 58 | 41 | 34 | 29 | / | 6,7 |

| Exemple 9 | t=0 | 6h | 1jour | 2jours | 3jours | 4jours | 7jours | Polymère linéaire Exemple 4 |
|---|---|---|---|---|---|---|---|---|
| 95°C | 72 | 45 | 27 | 19 | 16 | / | / | 6,1 |
| 85°C | 72 | 54 | 34 | 26 | / | 18 | 13 | 6,1 |
| 75°C | 72 | 50 | 43 | 33 | / | | 21 | 6,1 |

**Exemple 12 :**

**évaluation en condition statique des performances d'inhibition du BaSO4 des nanogels après vieillissement thermique à 150°C**

Dans cet exemple, on a mesuré l'efficacité d'inhibition des nanogels après un traitement thermique, ce qui met là encore en évidence le relargage des unités polymériques linéaires, dans les conditions ci-après.

On prépare des solutions à 10% poids en nanogels dans de l'eau permuté, le pH de ces solutions est ajusté à 6. Ces solutions sont introduites dans des enceintes en téflon, puis dégazées pendant 30 minutes sous un bullage d'azote. Après avoir refermé ces enceintes en téflon, on les place dans un système en acier, appelé « bombe de Parr »,

permettant de travailler en condition hydrothermale au dessus de 100°C.
Ces bombes de Parr sont placées dans une étuve à 150°C pendant 5 jours.
A l'issu de ce traitement thermique, les nanogels sont évalués selon le mode opératoire décrit dans l'exemple 10 et leur performance d'inhibition du $BaSO_4$ sont ainsi évaluées. Le taux de polymère dans ces « jar test » est de 15 ppm.

Le tableau ci-dessous regroupe les performances avant et après vieillissement. Ces résultats illustrent la capacité des nanogels à relarguer les espèces polymériques linéaires puisqu'on retrouve après vieillissement le niveau de performances des espèces linéaires.

| inhibiteur | % efficacité d'inhibition $BaSO_4$ (15 ppm) avant vieillissement | % efficacité d'inhibition $BaSO_4$ (15 ppm) après vieillissement à 150°C pendant 5 jours |
|---|---|---|
| Exemple 1 pAA lineaire | 77 | 81 |
| Exemple 5 nanogel AA/MBA | 61 | 85 |
| Exemple 6 nanogel AA/MBA | 45 | 80 |

**Exemple 13 :**

**Adsorption sur alumine et kaolinite**

L'argile utilisée comme support d'adsorption est de la kaolinite. Sa surface spécifique mesurée suivant la méthode BET à l'azote est de 12 m2/g.

L'alumine utilisée comme support d'adsorption a une surface spécifique de 200 m2/g mesurée suivant la méthode BET à l'azote.

On prépare 1 litre de saumure dont la composition pour 1 litre est la suivante

2,4 g de NaCl
5,7 g de $MgCl_2,6H_2O$
1,5 g de $CaCl_2,2H_2O$

A partir de cette saumure, on prépare une solution contenant 1000 ppm en polymère ou nanogel. Le pH de ces solutions est contrôlé : il est après adsorption de 5,0 pour le support alumine et de 3,1 pour le support kaolinite.
Puis, on introduit dans des flacons en verre le solide ainsi que 30 g de solution à concentration variable en polymère ou nanogel. Pour la kaolinite, 2 g de solide sont mis en contact avec les 30 g de solution ; pour l'alumine 0,2 g de solide sont mis en contact avec les 30 g de solution.
Les flacons contenant le solide et la solution sont refermés puis agités à la main et introduits dans une étuve à 85°C dans laquelle ils séjournent environ 15 heures.
Après 15 heures de mise en contact, on prélève à chaud le surnageant sur lequel on mesure la concentration en polymère par détermination du taux de carbone organique au moyen d'un COTmètre (LabToc de Pollution &Process Monitoring).
Ce taux a été également déterminé sur les solutions avant mise en contact.
Par différence, on en déduit le taux de polymère ou de nanogel adsorbé en surface du solide
Le tableau ci-dessous regroupe les adsorptions mesurées exprimées en mg/g (mg de polymère ou nanogel par g de solide) ; les $C_{ini}$ représentent les concentrations initiales en polymère dans la solution avant adsorption exprimées en ppm.

| **inhibiteur** | **Quantité Adsorbée** (mg additif / g d'argile) | **Quantité Adsorbée** (mg additif / g d'alumine |
|---|---|---|
| **exemple 1** p-AA | 7,6 | 115 |
| **exemple 2** p-AA (ref 303) | 5,3 | 133 |
| **exemple 3** nanogel AA-DiEGDA | 9,3 | 114 |
| **exemple 4** nanogel AA-DiEGDA | 8,6 | 124 |

## Revendications

1. Composition comprenant, au sein d'un milieu solvant **S,** des polymères **P** réticulés chimiquement, et résultant de la copolymérisation radicalaire d'un mélange de monomères incluant :

   - des monomères **m1** éthyléniquement insaturés, choisis parmi les monomères qui forment par polymérisation un polymère ayant un effet d'inhibition de la formation de dépôt organique et/ou inorganique ; et
   - des monomères **m2** polyéthyléniquement insaturés, et porteurs d'au moins un groupement clivable entre deux insaturations éthyléniques,

   et où lesdits polymères **P** sont présents au sein du milieu solvant **S** sous la forme d'objets dispersés ayant des dimensions inférieures au micron, où.
   la composition est préparée selon un procédé qui comporte une étape (E) dans laquelle on met en présence :

   - les monomères m1 éthyléniquement insaturés tels que définis dans la revendication 1 ;
   - les monomères m2 polyéthyléniquement insaturés et porteurs d'une fonction clivable, tels que définis dans la revendication 1,
   - une source de radicaux libres ; et
   - un agent de contrôle de la polymérisation,

   avec un taux de réticulation, défini par le rapport molaire m2/(m1+m2), correspondant à la quantité de monomères m2 rapportée à la quantité totale de monomères, compris entre 0,05 et 25% .

2. Composition selon la revendication 1, où les polymères P sont obtenus *via* une polymérisation radicalaire des monomères m1 et m2 réalisée en solution, en employant de préférence le milieu solvant S à titre de solvant de polymérisation.

3. Composition selon l'une des revendications 1 à 2, où les polymères P comprennent des groupes clivables, introduits *via* l'emploi des monomères m2, qui sont des groupes divalents choisis parmi les groupes - ester - ; - amide - ; - éther - ; - éther phosphate - ; et/ou - éther sulfate -

4. Composition selon la revendication 3, où les groupes clivables sont des groupes esters ou amide, de préférence ester.

5. Composition selon l'une des revendications 1 à 4, où les polymères P sont présents sous la forme d'objets ayant un rayon de giration inférieur à 100 nm, de préférence inférieur à 75 nm.

6. Composition selon l'une des revendications 1 à 5, où les monomères m1 sont des acides carboxyliques, sulfoniques et/ou phosphoniques éthyléniquement insaturés ou des dérivés de tels acides choisis parmi :

   - l'acide acrylique, l'acide méthacrylique et l'acide éthacrylique ;
   - l'acide $\alpha$-chloroacrylique, l'acide crotonique, l'acide maléique, l'anhydride maléique, l'acide itaconique, l'acide citraconique, l'acide mésaconique, l'acide glutaconique, l'acide aconitique, l'acide fumarique ;
   - les monoesters d'acide dicarboxylique monoéthyleniquement insaturé, où l'acide dicarboxylique monoéthyléniquement insaturé comprend de préférence de 4 à 10 atomes de carbone, par exemple de 4, 5 ou 6 ;
   - l'acide maléique monométhylé ;
   - l'acide vinylsulfonique, l'acide allylsulfonique, l'acrylate de sulfoéthyle, le méthacrylate de sulfoéthyle, l'acrylate de sulfopropyle, le méthacrylate de sulfopropyle, l'acide 2-hydroxy-3-acryloyloxypropylsulfonique, l'acide 2-hydroxy-3-methacryloyloxy propylsulfonique, les acides styrènesulfoniques, l'acide 2-acrylamido-2-méthyl propanesulfonique, l'acide vinylphosphonique, l'acide isopropénylphosphonique;
   - les acides allylphosphosphoniques, l'acide diallylaminométhylenephosphonique ;
   - les mélanges de deux ou plusieurs de ces acides ou dérivés d'acide.

7. Composition selon l'une des revendications 1 à 6, où les monomères m1 sont choisis parmi l'acide acrylique, le vinyl sulfonate de sodium, l'acide styrènesulfonique et/ou l'acide vinylphosphonique

8. Composition selon l'une des revendications 1 à 7, où les monomères m2 sont des esters acryliques, des esters méthacryliques, des éthers de diallyle ou des éthers de divinyle des alcools dihydriques suivant :

- le 1,2-éthanediol ; le 1,2-propanediol ; le 1,3-propanediol ; le 1,2-butanediol, ; le 1,3-butanediol ; le 2,3-butanediol ; le 1,4-butanediol ; le but-2-ène-1, 4-diol ; le1,2-pentanediol, le 1,5-pentanediol, le diethylène glycol, le triethylène glycol, le tetraéthylene glycol ; le dipropylène glycol ; le tripropylène glycol ; le tetrapropylène glycol, le 3-thiapentane-1, 5-diol ;
- les polyethylène glycols et/ou polypropylène glycols ; et les polvtétrahydrofuranes, ces polyols ayant une masse moléculaire de préférence comprise entre 200 to 10 000 ;
- les mélange de deux ou plusieurs de ces alcools.

**9.** Composition selon l'une des revendications 1 à 8, où les monomères m2 sont choisis parmi le diéthyleneglycol diAcrylate (DiEGDA) et le N,N'-Méthylènebisacrylamide (MBA)

**10.** Procédé pour la préparation d'une composition selon l'une des revendications 1 à 9, qui comporte une étape (E) dans laquelle on met en présence :

- des monomères (m1) éthyléniquement insaturés tels que définis dans la revendication 1 ;
- des monomères (m2) polyéthyléniquement insaturés et porteurs d'une fonction clivable, tels que définis dans la revendication 1 ou 2,
- une source de radicaux libres ; et
- un agent de contrôle de la polymérisation,

avec un taux de réticulation, défini par le rapport molaire m2/(m1+m2), correspondant à a quantité de monomères m2 rapportée à la quantité totale de monomères, compris entre 0,05 et 25%

**11.** Procédé selon la revendication 10, où, dans l'étape (E), la quantité d'agent de contrôle rapportée à la quantité totale de monomères (agent de contrôle)/(m1+m2) est comprise entre 0,1% et 10%, de préférence entre 0,15 et 5%

**12.** Utilisation d'une composition selon l'une des revendications 1 à 9, ou d'une composition susceptible d'être obtenue selon le procédé de la revendication 10 ou de la revendication 11, à titre d'inhibiteur de formation de dépôts inorganiques ou organiques au sein d'une formation souterraine dans le cadre d'une extraction pétrolière.

**Patentansprüche**

**1.** Zusammensetzung, umfassend in einem Lösungsmittelmedium **S** chemisch vernetzte Polymere **P** aus der radikalischen Copolymerisation einer Mischung von Monomeren, die

- ethylenisch ungesättigte Monomere **m1,** ausgewählt aus Monomeren, die durch Polymerisation ein Polymer mit inhibierender Wirkung auf die Bildung einer organischen und/oder anorganischen Ablagerung bilden; und
- mehrfach ethylenisch ungesättigte Monomere **m2** mit mindestens einer Gruppe, die zwischen zwei ethylenischen Ungesättigtheiten spaltbar ist; enthält;

wobei die Polymere **P** in dem Lösungsmittelmedium **S** in Form von dispergierten Objekten mit Abmessungen von weniger als 1 Mikron vorliegen, wobei die Zusammensetzung nach einem Verfahren hergestellt wird, das einen Schritt (E) umfasst, bei dem man Folgendes zusammenbringt:

- die ethylenisch ungesättigten Monomere m1 gemäß Anspruch 1;
- die mehrfach ethylenisch ungesättigten Monomere m2 mit einer spaltbaren Funktion gemäß Anspruch 1;
- eine Radikalquelle und
- ein Polymerisationskontrollmittel,

mit einem durch das Molverhältnis m2/(m1+m2), das der Menge der Monomere m2 im Verhältnis zur Gesamtmenge der Monomere entspricht, definierten Vernetzungsgrad zwischen 0,05 und 25%.

**2.** Zusammensetzung nach Anspruch 1, wobei die Polymere P durch eine in Lösung, vorzugsweise unter Verwendung des Lösungsmittelmediums **S** als Polymerisationsmedium, durchgeführte radikalische Polymerisation der Monomere m1 und m2 erhalten werden.

**3.** Zusammensetzung nach einem der Ansprüche 1 bis 2, wobei die Polymere P durch die Verwendung der Monomere

m2 eingeführte spaltbare Gruppen umfassen, bei denen es sich um zweiwertige Gruppen handelt, die aus -Ester-; -Amid-; -Ether-; -Etherphosphat- und/oder -Ethersulfat-Gruppen ausgewählt sind.

**4.** Zusammensetzung nach Anspruch 3, wobei es sich bei den spaltbaren Gruppen um Ester- oder Amidgruppen, vorzugsweise Estergruppen, handelt.

**5.** Zusammensetzung nach einem der Ansprüche 1 bis 4, wobei die Polymere P in Form von Objekten mit einem Gyrationsradius von weniger als 100 nm, vorzugsweise weniger als 75 nm, vorliegen.

**6.** Zusammensetzung nach einem der Ansprüche 1 bis 5, wobei es sich bei den Monomeren m1 um ethylenisch ungesättigte Carbonsäuren, Sulfonsäuren und/oder Phosphonsäuren oder Derivate derartiger Säuren handelt, die ausgewählt sind aus:

- Acrylsäure, Methacrylsäure und Ethacrylsäure;
- $\alpha$-Chloracrylsäure, Crotonsäure, Maleinsäure, Maleinsäureanhydrid, Itaconsäure, Citraconsäure, Mesaconsäure, Glutaconsäure, Aconitsäure, Fumarsäure;
- Monoestern von einfach ethylenisch ungesättigten Dicarbonsäuren, wobei die einfach ethylenisch ungesättigte Dicarbonsäure vorzugsweise 4 bis 10 Kohlenstoffatome, beispielsweise 4, 5 oder 6, umfasst;
- monomethylierter Maleinsäure;
- Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloyloxypropylsulfonsäure, 2-Hydroxy-3-methacryloyloxypropylsulfonsäure, Styrolsulfonsäuren, 2-Acrylamido-2-methylpropansulfonsäure, Vinylphosphonsäure, Isopropenylphosphonsäure;
- Allylphosphosphonsäuren, Diallylaminomethylenphosphonsäure;
- Mischungen von zwei oder mehr dieser Säuren oder Säurederivate.

**7.** Zusammensetzung nach einem der Ansprüche 1 bis 6, wobei die Monomere m1 aus Acrylsäure, Natriumvinylsulfonat, Styrolsulfonsäure und/oder Vinylphosphonsäure ausgewählt sind.

**8.** Zusammensetzung nach einem der Ansprüche 1 bis 7, wobei es sich bei den Monomeren m2 um Acrylsäureester, Methacrylsäureester, Diallylether oder Divinylether der folgenden zweiwertigen Alkohole handelt:

- 1,2-Ethandiol; 1,2-Propandiol; 1,3-Propandiol; 1,2-Butandiol; 1,3-Butandiol; 2,3-Butandiol; 1,4-Butandiol; But-2-en-1,4-diol; 1,2-Pentandiol; 1,5-Pentandiol; Diethylenglykol; Triethylenglykol; Tetraethylenglykol; Dipropylenglykol; Tripropylenglykol; Tetrapropylenglykol; 3-Thiapentan-1,5-diol;
- Polyethylenglykole und/oder Polypropylenglykole und Polytetrahydrofurane, wobei diese Polyole vorzugsweise ein Molekulargewicht zwischen 200 und 10.000 aufweisen;
- Mischungen von zwei oder mehr dieser Alkohole.

**9.** Zusammensetzung nach einem der Ansprüche 1 bis 8, wobei die Monomere m2 aus Diethylenglykoldiacrylat (DiEGDA) und N,N'-Methylenbisacrylamid (MBA) ausgewählt sind.

**10.** Verfahren zur Herstellung einer Zusammensetzung nach einem der Ansprüche 1 bis 9, das einen Schritt (E) umfasst, bei dem man Folgendes zusammenbringt:

- ethylenisch ungesättigte Monomere (m1) gemäß Anspruch 1;
- mehrfach ethylenisch ungesättigte Monomere (m2) mit einer spaltbaren Funktion gemäß Anspruch 1 oder 2;
- eine Radikalquelle und
- ein Polymerisationskontrollmittel,

mit einem durch das Molverhältnis m2/(m1+m2), das einer Menge der Monomere m2 im Verhältnis zur Gesamtmenge der Monomere entspricht, definierten Vernetzungsgrad zwischen 0,05 und 25%.

**11.** Verfahren nach Anspruch 10, bei dem in Schritt (E) die Menge an Kontrollmittel im Verhältnis zur Gesamtmenge der Monomere (Kontrollmittel)/(m1+m2) zwischen 0,1% und 10%, vorzugsweise zwischen 0,15% und 5%, liegt.

**12.** Verwendung einer Zusammensetzung nach einem der Ansprüche 1 bis 9 oder einer nach dem Verfahren von Anspruch 10 oder Anspruch 11 erhältlichen Zusammensetzung als Inhibitor der Bildung von anorganischen oder organischen Ablagerungen in einer unterirdischen Formation im Rahmen einer Erdölförderung.

## Claims

1. Composition comprising, in a solvent medium **S,** chemically crosslinked polymers **P** resulting from the radical copolymerization of a mixture of monomers including:

   - ethylenically unsaturated monomers **m1,** selected from monomers which form by polymerization a polymer having an effect of inhibiting organic and/or inorganic deposit formation; and
   - polyethylenically unsaturated monomers **m2,** bearing at least one group which is cleavable between two ethylenic unsaturations,

   and where said polymers **P** are present in the solvent medium **S** in the form of dispersed objects having sizes of less than 1 micron, and where
   the composition is prepared according to a process which comprises a step (E) in which the following are brought together:

   - the ethylenically unsaturated monomers m1 as defined in claim 1;
   - the polyethylenically unsaturated monomers m2 bearing a cleavable function, as defined in claim 1;
   - a source of free radicals; and
   - a polymerization control agent,

   with a degree of crosslinking, defined by the molar ratio m2/(m1+m2), corresponding to the amount of monomers m2 relative to the total amount of monomers, of between 0.05% and 25%.

2. Composition according to Claim 1, wherein the polymers P are obtained *via* a radical polymerization of the monomers m1 and m2 carried out in solution, preferably using the solvent medium **S** as polymerization solvent.

3. Composition according to either of Claims 1 and 2, wherein the polymers P comprise cleavable groups, introduced *via* the use of the monomers m2, which are divalent groups selected from - ester -; - amide -; - ether -; - ether phosphate -; and/or - ether sulfate - groups.

4. Composition according to Claim 3, wherein the cleavable groups are ester or amide groups, preferably ester groups.

5. Composition according to one of Claims 1 to 4, wherein the polymers P are present in the form of objects having a radius of gyration of less than 100 nm, preferably less than 75 nm.

6. Composition according to one of Claims 1 to 5, wherein the monomers m1 are ethylenically unsaturated carboxylic, sulfonic and/or phosphonic acids or derivatives of such acids selected from:

   - acrylic acid, methacrylic acid and ethacrylic acid;
   - $\alpha$-chloroacrylic acid, crotonic acid, maleic acid, maleic anhydride, itaconic acid, citraconic acid, mesaconic acid, glutaconic acid, aconitic acid, fumaric acid;
   - monoesters of monoethylenically unsaturated dicarboxylic acid, where the monoethylenically unsaturated dicarboxylic acid preferably comprises from 4 to 10 carbon atoms, for example 4, 5 or 6;
   - monomethylated maleic acid;
   - vinylsulfonic acid, allylsulfonic acid, sulfoethyl acrylate, sulfoethyl methacrylate, sulfopropyl acrylate, sulfopropyl methacrylate, 2-hydroxy-3-acryloyloxypropylsulfonic acid, 2-hydroxy-3-methacryloyloxypropylsulfonic acid, styrenesulfonic acids, 2-acrylamido-2-methylpropanesulfonic acid, vinylphosphonic acid, isopropenylphosphonic acid;
   - allylphosphosphonic acids, diallylaminomethylenephosphonic acid;
   - mixtures of two or more of these acids or acid derivatives.

7. Composition according to one of Claims 1 to 6, wherein the monomers m1 are selected from acrylic acid, sodium vinyl sulfonate, styrenesulfonic acid and/or vinylphosphonic acid.

8. Composition according to one of Claims 1 to 7, wherein the monomers m2 are acrylic esters, methacrylic esters, diallyl ethers or divinyl ethers of the following dihydric alcohols:

   - 1,2-ethanediol; 1,2-propanediol; 1,3-propanediol; 1,2-butanediol; 1,3-butanediol; 2,3-butanediol; 1,4-butanediol; but-2-ene-1,4-diol; 1,2-pentanediol; 1,5-pentanediol; diethylene glycol; triethylene glycol; tetraethylene glycol; dipropylene glycol; tripropylene glycol; tetrapropylene glycol; 3-thiapentane-1, 5-diol;
- polyethylene glycols and/or polypropylene glycols; and polytetrahydrofurans, these polyols having a molecular weight preferably of between 200 and 10 000;
- mixtures of two or more of these alcohols.

**9.** Composition according to one of Claims 1 to 8, wherein the monomers m2 are selected from diethylene glycol diacrylate (DiEGDA) and N,N'-methylenebisacrylamide (MBA).

**10.** Process for preparing a composition according to one of Claims 1 to 9, which comprises a step (E) in which the following are brought together:

- ethylenically unsaturated monomers (m1) as defined in claim 1;
- polyethylenically unsaturated monomers (m2) bearing a cleavable function, as defined in claim 1 or 2;
- a source of free radicals; and
- a polymerization control agent,

with a degree of crosslinking, defined by the molar ratio m2/(m1+m2), corresponding to the amount of monomers m2 relative to the total amount of monomers, of between 0.05% and 25%.

**11.** Process according to Claim 10, wherein, in step (E), the amount of control agent relative to the total amount of monomers (control agent)/(m1+m2) is between 0.1% and 10%, preferably between 0.15% and 5%.

**12.** Use of a composition according to one of Claims 1 to 9, or of a composition which can be obtained according to the process of Claim 10 or of Claim 11, as an inhibitor of the formation of inorganic or organic deposits in an underground formation in the context of an oil extraction.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 599832 A
- US 5399270 A
- WO 03106810 A
- US 20100093874 A